# EUROPEAN PATENT APPLICATION

(11) **EP 4 592 155 A1**
(43) Date of publication of application: **30.07.2025**
(21) Application number: 23878698.2
(22) Date of filing: 29.06.2023
(51) Int. Cl.: B60W 30/182, B60W 60/00, G05D 1/20

(54) **LANE CHANGING METHOD AND APPARATUS, AND INTELLIGENT DRIVING DEVICE**

(30) Priority: 21.10.2022 CN 202211291092
(71) Applicant: Shenzhen Yinwang Intelligent Technologies Co., Ltd., Shenzhen, Guangdong 518129 (CN)
(72) Inventor: CHEN, Anlin, Shenzhen, Guangdong 518129 (CN); QIAN, Chaojie, Shenzhen, Guangdong 518129 (CN); ZENG, Xia, Shenzhen, Guangdong 518129 (CN); WANG, Chaoran, Shenzhen, Guangdong 518129 (CN); WANG, Xinyu, Shenzhen, Guangdong 518129 (CN); HUANG, Zhuoran, Shenzhen, Guangdong 518129 (CN)
(74) Representative: Gill Jennings & Every LLP
(86) International application number: PCT/CN2023/103838
(87) International publication number: WO 2024/082701

(57) **Abstract**

A lane change method is provided, including: determining a first lane change mode from a plurality of lane change modes based on a first instruction, where a user of an intelligent driving device is provided with different lane change manners in the plurality of lane change modes (S301); prompting for a first lane change task in the first lane change mode (S302); and controlling, based on the first lane change task and a first lane change manner that is provided for the user in the first lane change mode, the intelligent driving device to perform lane change or cancel lane change (S303). The method may be applied to the intelligent driving device like an intelligent vehicle or an electric vehicle, to provide a plurality of lane change manners, support the user in selecting a lane change manner based on a habit, and help improve driving experience of the user. An apparatus and an intelligent driving device are further provided.

## Description

This application claims priority to Chinese Patent Application No. 202211291092.4, filed with the China National Intellectual Property Administration on October 21, 2022 and entitled "LANE CHANGE METHOD AND APPARATUS, AND INTELLIGENT DRIVING DEVICE", which is incorporated herein by reference in its entirety.

### TECHNICAL FIELD

This application relates to the field of intelligent driving, and more specifically, to a lane change method and apparatus, and an intelligent driving device.

### BACKGROUND

With rapid development of the automobile industry, many assisted driving technologies and automated driving technologies are generated, so that driving pressure can be reduced, and safety and traffic efficiency can be improved. In a current technical background, in an intelligent driving lane change assistance system, a user usually needs to confirm whether to perform lane change. However, habits of different users cannot be met. In addition, there are problems such as a single confirmation manner and poor fitting with a manual driving behavior.

### SUMMARY

Embodiments of this application provide a lane change method and apparatus, and an intelligent driving device, to provide a plurality of lane change manners, support a user in selecting a lane change manner based on a habit, and help improve driving experience of the user.

According to a first aspect, a lane change method is provided. The method may be performed by an intelligent driving device, or may be performed by a vehicle-mounted terminal like an in-vehicle infotainment of the intelligent driving device, or may be performed by a chip or a circuit used for the intelligent driving device. This is not limited in this application.

The intelligent driving device in this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application.

The method includes: determining a first lane change mode from a plurality of lane change modes based on a first instruction, where a user of the intelligent driving device is provided with different lane change manners in the plurality of lane change modes; prompting for a first lane change task in the first lane change mode; and controlling, based on the first lane change task and a first lane change manner that is provided for the user in the first lane change mode, the intelligent driving device to perform lane change or cancel lane change.

For example, the first instruction may be generated based on a setting or selection of the user.

For example, the plurality of lane change modes may include a mode in which confirmation is required, a mode in which confirmation is required at a high speed, and an intelligent initiation mode.

For example, the lane change manner may include at least one of a manner in which user confirmation is required, a manner in which automatic confirmation is performed after limited time, and a manner in which no user confirmation is required. In the lane change manner in which user confirmation is required and the lane change manner in which automatic confirmation is performed after limited time, the user is supported in confirming lane change or canceling lane change in a plurality of manners.

In the foregoing technical solution, the plurality of lane change modes are supported, and a lane change mode used during traveling can be determined from the plurality of lane change modes based on selection of the user, so that different driving habits of users can be met. In addition, the plurality of manners for confirming lane change or canceling lane change are provided for the user, to reduce a probability that a lane change occasion is missed due to untimely confirmation. This helps reduce a possibility that the user is distracted due to a lane change operation, and further improves traveling safety.

With reference to the first aspect, in some implementations of the first aspect, the method further includes: determining the first lane change manner based on a traveling speed of the intelligent driving device.

The controlling, based on the first lane change task and a first lane change manner that is provided for the user in the first lane change mode, the intelligent driving device to perform lane change or cancel lane change includes: controlling, based on the first lane change task and the first lane change manner in response to a first preset operation of the user, the intelligent driving device to perform lane change or cancel lane change.

For example, when the first lane change mode is the mode in which confirmation is required at a high speed, the first lane change manner may be determined based on the traveling speed of the intelligent driving device.

With reference to the first aspect, in some implementations of the first aspect, when the traveling speed is greater than or equal to a first preset speed threshold, the first preset operation includes at least one of toggling a lever and rotating a steering wheel; or when the traveling speed is less than the first preset speed threshold, the first preset operation includes at least one of toggling a lever, rotating a steering wheel, pressing a steering wheel button, and performing no action within first duration.

It should be noted that the foregoing "performing no action" means that the user does not perform any operation. Further, when the user does not perform any operation within the first duration, the intelligent driving device performs lane change based on the first lane change task.

For example, the first preset speed may be 60 kilometers/hour, or may be 65 kilometers/hour, or may be another value. The first duration may be 2 seconds, or may be 3 seconds, or may be another value.

In the foregoing technical solution, a manner that is provided for the user and that is for confirming lane change or canceling lane change may be determined based on the traveling speed of the intelligent driving device. This helps improve lane change convenience and traveling safety of the intelligent driving device. In addition, when the speed is low, lane change can be further canceled within specific duration in response to a corresponding operation of the user, to respect a willingness of the user. This helps improve driving experience of the user.

With reference to the first aspect, in some implementations of the first aspect, the method further includes: determining the first lane change manner based on a traveling speed and a traveling scenario of the intelligent driving device. The controlling, based on the first lane change task and a first lane change manner that is provided for the user in the first lane change mode, the intelligent driving device to perform lane change or cancel lane change includes: controlling, based on the first lane change task, the first lane change manner, and a first preset scenario, the intelligent driving device to perform lane change or cancel lane change; or controlling, based on the first lane change task and the first lane change manner in response to a second preset operation of the user, the intelligent driving device to perform lane change or cancel lane change.

For example, when the first lane change mode is the intelligent initiation mode, the first lane change manner may be determined based on the traveling speed and the traveling scenario of the intelligent driving device.

For example, the first preset scenario may include a traveling scenario of converging from a ramp to a main road.

In the foregoing technical solution, a manner that is provided for the user and that is for confirming lane change or canceling lane change may be determined based on the traveling speed and the traveling scenario of the intelligent driving device. This helps improve intelligence, lane change convenience and traveling safety of the intelligent driving device. In addition, when the traveling scenario is a scenario of converging from the ramp to the main road, a lane change operation can be performed without requiring user confirmation, so that a lane change process is more humanized. This helps improve driving experience of the user.

With reference to the first aspect, in some implementations of the first aspect, when the traveling speed is greater than or equal to a second preset speed threshold, the second preset operation includes at least one of toggling a lever and rotating a steering wheel; or when the traveling speed is less than the second preset speed threshold, and the traveling scenario is a second preset scenario, the second preset operation includes at least one of toggling a lever, rotating a steering wheel, pressing a steering wheel button, and performing no action within second duration.

For example, the second preset scenario may include at least one of lane change during overtaking, lane change based on navigation information, and lane change in an emergency. The lane change in an emergency may include lane change performed to avoid an obstacle.

For example, the second preset speed may be 60 kilometers/hour, or may be 65 kilometers/hour, or may be another value. The second duration may be 2 seconds, or may be 3 seconds, or may be another value.

In the foregoing technical solution, when a traveling scenario indicates that the intelligent driving device needs to perform lane change for driving due to overtaking, a navigation indication, or an emergency, lane change may be automatically performed within specific duration without a user indication, so that the intelligent driving device is more humanized and intelligent. In addition, lane change can be further canceled within specific duration in response to an operation of the user, to respect a willingness of the user. This helps improve driving experience of the user.

With reference to the first aspect, in some implementations of the first aspect, when the first lane change task indicates the intelligent driving device to change from a first lane to a second lane, and the second preset operation is an operation of toggling the lever in a first direction or rotating the steering wheel in the first direction, the controlling the intelligent driving device to perform lane change or cancel lane change includes: controlling, in response to the second preset operation, the intelligent driving device to cancel lane change, where the first direction is a direction opposite to a direction in which the intelligent driving device changes from the first lane to the second lane.

With reference to the first aspect, in some implementations of the first aspect, after the controlling the intelligent driving device to cancel lane change, the method further includes: prompting for a second lane change task.

In the foregoing technical solution, after the user confirms not to perform lane change, a lane change task is initiated again, to reduce a probability of missing an intersection or a ramp intersection.

With reference to the first aspect, in some implementations of the first aspect, when the first lane change task indicates the intelligent driving device to change from a third lane to a fourth lane, and the second preset operation is an operation of toggling the lever in a second direction or rotating the steering wheel in the second direction within the second duration, the controlling the intelligent driving device to perform lane change or cancel lane change includes: controlling, in response to the second preset operation, the intelligent driving device to change from the third lane to the fourth lane, where the second direction is a direction the same as a direction in which the intelligent driving device changes from the third lane to the fourth lane.

With reference to the first aspect, in some implementations of the first aspect, the method further includes: when it is detected, within third duration, that the intelligent driving device needs to change from the fourth lane to a fifth lane, controlling the intelligent driving device to perform lane change.

For example, the third duration may be 10 seconds, or may be 5 seconds, or may be other duration.

For example, the fourth lane and the fifth lane may be adjacent lanes, or one or more lanes may be included between the fourth lane and the fifth lane.

In some possible implementations, it may be determined, based on navigation information, that the intelligent driving device needs to change from the fourth lane to the fifth lane. For example, when the intelligent driving device travels on a leftmost lane (for example, the third lane), if it is determined, based on the navigation information, that the intelligent driving device needs to turn right at a front intersection, it is determined that the intelligent driving device needs to change from the leftmost lane to a rightmost lane (the fifth lane) through a middle lane (including the fourth lane). When the first lane change task (a lane change task of changing from the third lane to the fourth lane) is prompted for, after the intelligent driving device completes lane change in response to the second preset operation of the user within the second duration, the intelligent driving device may automatically change from the fourth lane to the fifth lane within the third duration.

In the foregoing technical solution, in a continuous navigation lane change scenario, user confirmation is no longer required starting from a second time of lane change, so that lane change in the traveling scenario becomes more humanized. This helps improve user experience.

With reference to the first aspect, in some implementations of the first aspect, when the traveling speed is less than the second preset speed threshold, the first lane change task indicates the intelligent driving device to change from a sixth lane to a seventh lane, and in response to an operation of pressing the steering wheel button, after the intelligent driving device is controlled to change from the sixth lane to the seventh lane, the method further includes: when it is detected, within fourth duration, that the intelligent driving device needs to change from the seventh lane to an eighth lane, controlling the intelligent driving device to perform lane change.

For example, the fourth duration may be 20 seconds, or may be 30 seconds, or may be other duration.

In the foregoing technical solution, when the intelligent driving device is low, after lane change is performed in response to the operation of pressing the steering wheel button by the user, when it is detected within specific duration that lane change still needs to be performed, a lane change operation can be performed without requiring user confirmation. This helps improve humanization of the intelligent driving device while ensuring traveling safety, and helps improve user experience.

According to a second aspect, a lane change apparatus is provided. The apparatus includes a first determining unit, a prompting unit, and a processing unit. The first determining unit is configured to determine a first lane change mode from a plurality of lane change modes based on a first instruction, where a user of an intelligent driving device is provided with different lane change manners in the plurality of lane change modes. The prompting unit is configured to prompt for a first lane change task in the first lane change mode. The processing unit is configured to: control, based on the first lane change task and a first lane change manner that is provided for the user in the first lane change mode, the intelligent driving device to perform lane change or cancel lane change.

With reference to the second aspect, in some implementations of the second aspect, the apparatus further includes a second determining unit, configured to determine the first lane change manner based on a traveling speed of the intelligent driving device. The processing unit is configured to: control, based on the first lane change task and the first lane change manner in response to a first preset operation of the user, the intelligent driving device to perform lane change or cancel lane change.

With reference to the second aspect, in some implementations of the second aspect, when the traveling speed is greater than or equal to a first preset speed threshold, the first preset operation includes at least one of toggling a lever and rotating a steering wheel; or when the traveling speed is less than the first preset speed threshold, the first preset operation includes at least one of toggling a lever, rotating a steering wheel, pressing a steering wheel button, and performing no action within first duration.

With reference to the second aspect, in some implementations of the second aspect, the apparatus further includes a third determining unit, configured to determine the first lane change manner based on a traveling speed and a traveling scenario of the intelligent driving device. The processing unit is configured to: control, based on the first lane change task, the first lane change manner, and a first preset scenario, the intelligent driving device to perform lane change or cancel lane change; or control, based on the first lane change task and the first lane change manner in response to a second preset operation of the user, the intelligent driving device to perform lane change or cancel lane change.

With reference to the second aspect, in some implementations of the second aspect, when the traveling speed is greater than or equal to a second preset speed threshold, the second preset operation includes at least one of toggling a lever and rotating a steering wheel; or when the traveling speed is less than the second preset speed threshold, and the traveling scenario is a second preset scenario, the second preset operation includes at least one of toggling a lever, rotating a steering wheel, pressing a steering wheel button, and performing no action within second duration.

With reference to the second aspect, in some implementations of the second aspect, when the first lane change task indicates the intelligent driving device to change from a first lane to a second lane, and the second preset operation is an operation of toggling the lever in a first direction or rotating the steering wheel in the first direction, the processing unit is configured to: control, in response to the second preset operation, the intelligent driving device to cancel lane change, where the first direction is a direction opposite to a direction in which the intelligent driving device changes from the first lane to the second lane.

With reference to the second aspect, in some implementations of the second aspect, after the processing unit controls the intelligent driving device to cancel lane change, the prompting unit is further configured to prompt for a second lane change task.

With reference to the second aspect, in some implementations of the second aspect, when the first lane change task indicates the intelligent driving device to change from a third lane to a fourth lane, and the second preset operation is an operation of toggling the lever in a second direction or rotating the steering wheel in the second direction within the second duration, the processing unit is configured to: control, in response to the second preset operation, the intelligent driving device to change from the third lane to the fourth lane, where the second direction is a direction the same as a direction in which the intelligent driving device changes from the third lane to the fourth lane.

With reference to the second aspect, in some implementations of the second aspect, the processing unit is further configured to: when it is detected, within third duration, that the intelligent driving device needs to change from the fourth lane to a fifth lane, control the intelligent driving device to perform lane change.

With reference to the second aspect, in some implementations of the second aspect, when the traveling speed is less than the second preset speed threshold, the first lane change task indicates the intelligent driving device to change from a sixth lane to a seventh lane, and in response to an operation of pressing the steering wheel button, after the processing unit controls the intelligent driving device to change from the sixth lane to the seventh lane, the processing unit is further configured to: when it is detected, within fourth duration, that the intelligent driving device needs to change from the seventh lane to an eighth lane, control the intelligent driving device to perform lane change.

According to a third aspect, a lane change apparatus is provided. The apparatus includes: a memory, configured to store a computer program; and a processor, configured to execute the computer program stored in the memory, so that the apparatus performs the method according to any one of the possible implementations of the first aspect.

According to a fourth aspect, an intelligent driving device is provided. The intelligent driving device includes the apparatus according to any one of the possible implementations of the second aspect or any one of the possible implementations of the third aspect.

With reference to the fourth aspect, in some implementations of the fourth aspect, the intelligent driving device is a vehicle.

According to a fifth aspect, a computer program product is provided. The computer program product includes computer program code, and when the computer program code is run on a computer, the computer is enabled to perform the method according to any one of the possible implementations of the first aspect.

It should be noted that all or some of the computer program code may be stored in a first storage medium. The first storage medium may be encapsulated together with a processor, or may be encapsulated separately from a processor.

According to a sixth aspect, a computer-readable medium is provided. The computer-readable medium stores instructions, and when the instructions are executed by a processor, the processor is enabled to implement the method according to any one of the possible implementations of the first aspect.

According to a seventh aspect, a chip is provided. The chip includes a circuit, and the circuit is configured to perform the method according to any one of the possible implementations of the first aspect.

### BRIEF DESCRIPTION OF DRAWINGS

FIG. 1 is a functional block diagram of an intelligent driving device according to an embodiment of this application;
FIG. 2 is a functional block diagram of a system architecture required for implementing a lane change method according to an embodiment of this application;
FIG. 3 is a schematic flowchart of a lane change method according to an embodiment of this application;
FIG. 4 shows a group of GUIs according to an embodiment of this application;
FIG. 5A and FIG. 5B show another group of GUIs according to an embodiment of this application;
FIG. 6A and FIG. 6B show another group of GUIs according to an embodiment of this application;
FIG. 7 is a diagram of a traveling scenario according to an embodiment of this application;
FIG. 8A and FIG. 8B show another group of GUIs according to an embodiment of this application;
FIG. 9A and FIG. 9B show another group of GUIs according to an embodiment of this application;
FIG. 10 is a block diagram of a lane change apparatus according to an embodiment of this application; and
FIG. 11 is another block diagram of a lane change apparatus according to an embodiment of this application.

### DESCRIPTION OF EMBODIMENTS

In descriptions of embodiments of this application, unless otherwise specified, "/" indicates "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof refers to any combination of these items including a singular item (piece) or any combination of plural items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish between different described objects, and do not limit locations, sequences, priorities, quantities, content, or the like of the described objects. In embodiments of this application, use of a prefix word like an ordinal number for distinguishing a described object does not constitute a limitation on the described object. For a description of the described object, refer to a description of the context in the claims or embodiments. The use of such a prefix word should not constitute a redundant limitation.

In a current intelligent driving system, a lane change assistance function is usually implemented in the following manner: After the intelligent driving system generates a lane change task, a user needs to confirm whether to perform lane change, and whether to perform lane change is mainly confirmed in control manners such as button control, lever control, and voice control. In addition, generally, after the user confirms that lane change is not performed, the intelligent driving system no longer initiates a lane change task.

The foregoing technical solution has the following disadvantages. First, a manner for confirming whether to perform lane change is simple. In this case, the user may fail to timely confirm whether to perform lane change. In addition, diversified traveling scenarios and a humanized confirmation requirement cannot be met. For example, when it is inconvenient for the user to operate a lever or a button with one hand, the user may fail to timely confirm or cancel the lane change task. Second, after the user confirms not to perform lane change, the intelligent driving system no longer initiates a lane change task. In this case, an intersection or a ramp is easily missed, and the intelligent driving system is not humanized enough.

In view of this, this application provides a lane change method and apparatus, and an intelligent driving device, to support a plurality of lane change modes. A lane change mode can be determined from the plurality of lane change modes based on a setting of a user, so that different driving habits of users can be met. In addition, a lane change manner may be confirmed based on a traveling scenario and/or a traveling speed, so that diversified traveling scenarios can be met, and a probability that a lane change occasion is missed due to untimely confirmation is reduced. In addition, this helps improve traveling safety.

It should be noted that the "lane change task" in embodiments of this application may be information that is generated by the intelligent driving device based on surrounding environment information of the intelligent driving device and/or navigation information and that suggests that lane change should be performed or notifies that lane change is to be performed. The intelligent driving device performs lane change or cancels lane change only after information suggesting that lane change should be performed is confirmed by the user. The intelligent driving device performs lane change without requiring the user to confirm the information notifying that lane change is to be performed, or the user is allowed to cancel the to-be-performed lane change within specific duration.

The following describes technical solutions of embodiments in this application with reference to accompanying drawings.

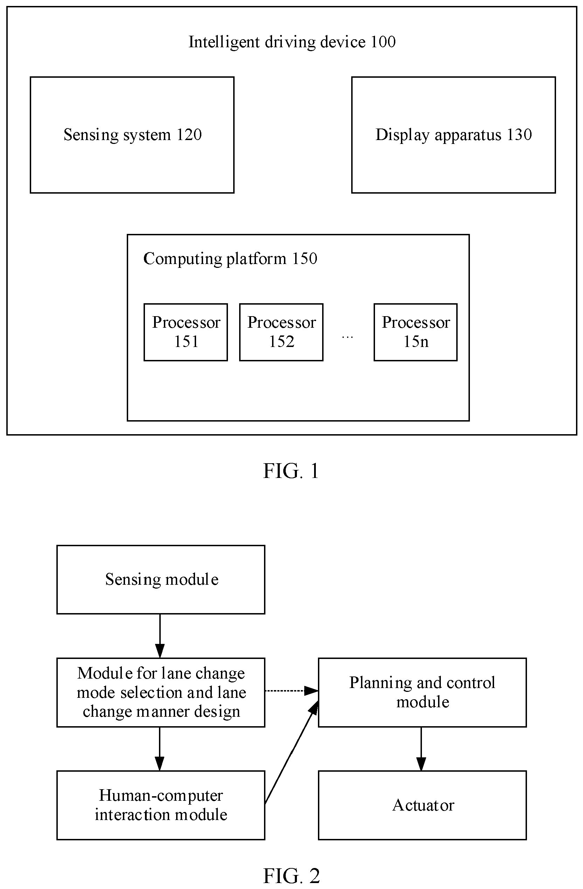

FIG. 1 is a functional block diagram of an intelligent driving device 100 according to an embodiment of this application. The intelligent driving device 100 may include a sensing system 120, a display apparatus 130, and a computing platform 150. The sensing system 120 may include one or more sensors that sense surrounding environment information of the intelligent driving device 100. For example, the sensing system 120 may include a positioning system, and the positioning system may be a global positioning system (global positioning system, GPS), or may be a BeiDou system or another positioning system, or an inertial measurement unit (inertial measurement unit, IMU). For another example, the sensing system 120 may further include one or more of a lidar, a millimeter-wave radar, an ultrasonic radar, and a camera apparatus. In some possible implementations, the intelligent driving device 100 may further include a sound generation device, for example, a speaker, configured to output an audio to a user of the intelligent driving device 100. In some possible implementations, the intelligent driving device 100 may alternatively perform voice interaction with the user by using another external device like a Bluetooth headset. This is not specifically limited in this embodiment of this application.

The display apparatus 130 in a cabin is mainly classified into two types. The first type is a vehicle-mounted display, and the second type is a projection display, for example, a head up display (head up display, HUD) apparatus. The vehicle-mounted display is a physical display, and is an important part of an in-vehicle infotainment system. A plurality of displays may be disposed in the cabin, for example, a digital instrument display (referred to as an instrument screen for short below), a central control screen, a display in front of a passenger (also referred to as a front-row passenger) in a co-driver seat, a display in front of a passenger in a left back row, and a display in front of a passenger in a right back row, and even a vehicle window may also be used as a display for displaying. In some possible implementations, one or more of the vehicle-mounted displays may be a human machine interface (human machine interface, HMI). For example, the central control screen may be an HMI. The head up display is also referred to as a head-up display system. The head up display is mainly configured to display driving information such as a speed and navigation on a display device (for example, a windshield) in front of the user, to reduce line-of-sight transfer time of the user, avoid a pupil change caused by a line-of-sight transfer of the user, and improve traveling safety and comfort. For example, the HUD includes a combiner-HUD (combiner-HUD, C-HUD) system, a windshield-HUD (windshield-HUD, W-HUD) system, and an augmented reality-HUD (augmented reality-HUD, AR-HUD) system.

Some or all functions of the intelligent driving device 100 may be controlled by the computing platform 150. The computing platform 150 may include one or more processors, for example, processors 151 to 15n (where n is a positive integer). The processor is a circuit having an instruction processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The intelligent driving device 100 may include an advanced driving assistance system (advanced driving assistance system, ADAS). The ADAS obtains information around the intelligent driving device by using a plurality of sensors (including but not limited to a lidar, a millimeter-wave radar, a camera apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and user monitoring/reminding, so as to improve driving safety, automation, and comfort of the intelligent driving device.

In terms of logical functions, the ADAS system generally includes three main functional modules: a sensing module, a decision module, and an execution module. The sensing module senses a surrounding environment of a vehicle body by using a sensor, and inputs corresponding real-time data to a decision layer processing center. The sensing module mainly includes a vehicle-mounted camera, an ultrasonic radar, a millimeter-wave radar, a lidar, and the like. Based on information obtained by the sensing module, the decision module makes a corresponding decision by using a computing apparatus and an algorithm. After receiving a decision instruction from the decision module, the execution module takes a corresponding action, for example, driving, performing lane change, steering, braking, or warning.

At different automated driving levels (LO to L5), the ADAS may implement different levels of automated driving assistance based on information obtained by using an artificial intelligence algorithm and a plurality of sensors. The foregoing automated driving levels (LO to L5) are based on a grading standard of the society of automotive engineers (society of automotive engineers, SAE). The level L0 indicates no automation, a level L1 indicates driving assistance, a level L2 indicates partial automation, a level L3 indicates conditional automation, a level L4 indicates high automation, and the level L5 indicates full automation. Tasks that are of monitoring and responding to road conditions and that are at the levels L1 to L3 are jointly completed by the user and the system, and the user needs to take over a dynamic driving task. The levels L4 and L5 enable the user to be completely transformed into a passenger. Currently, functions that can be implemented by the ADAS mainly include but are not limited to adaptive cruise, automatic emergency braking, automatic parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at different automated driving levels (LO to L5). A higher automated driving level indicates a more intelligent corresponding mode, and requires higher precision of a sensing algorithm and higher precision of a planning and control algorithm.

FIG. 2 is a block diagram of a system architecture required for implementing a lane change method according to an embodiment of this application. As shown in FIG. 2, the system includes a sensing module, a module for lane change mode selection and lane change manner design, a human-computer interaction module, a planning and control module, and an actuator. The sensing module may include one or more camera apparatuses or one or more radar sensors in the sensing system 120 shown in FIG. 1, and is configured to collect surrounding environment information of the intelligent driving device, a real-time motion parameter (like a traveling speed) of the intelligent driving device, and the like. The sensing module may further process the collected surrounding environment information, and establish a world model including a road, an obstacle, or the like for downstream modules (namely, a decision planning module and a control module). The module for lane change mode selection and lane change manner design may be one or more processors in the computing platform 150 shown in FIG. 1, and is configured to: confirm a lane change mode in response to a setting of a user, and design a lane change manner (namely, a manner for confirming whether to perform lane change) in the lane change mode based on the traveling speed and/or a surrounding environment of the intelligent driving device, where the lane change manner includes a manner for prompting for a lane change task, duration for waiting for a response from the user, and the like. For example, the lane change mode may include a mode in which confirmation is always required, a mode in which confirmation is required at a high speed (for example, when the traveling speed exceeds a preset speed threshold, the user needs to confirm whether to perform lane change), and an intelligent initiation mode (in which whether the user needs to confirm whether to perform lane change is confirmed based on a traveling scenario). The lane change manner may include a manner in which automatic confirmation is performed after limited time, a manner in which no user confirmation is required, a manner in which user confirmation is required, and the like. The human-computer interaction module may include one or more of the display apparatuses 130 shown in FIG. 1, for example, an HMI, or may further include one or more of a steering wheel system, a lever system, and a button system. The human-computer interaction module may notify the user of a lane change task, and confirm, in response to an operation of the user, whether to perform lane change. The planning and control module is configured to: plan a motion track based on a result (for example, confirming lane change) output by the human-computer interaction module, calculate a corresponding control value based on the planned motion track, and output the control value to the actuator. In some possible lane change modes, lane change is performed without requiring an operation of the user. In this case, the planning and control module may further plan a motion track based on a result (for example, confirming lane change) output by the module for lane change mode selection and lane change manner design, calculate a corresponding control value based on the planned motion track, and output the control value to the actuator. When the actuator executes the control value, the planning and control module controls the intelligent driving device to travel based on the planned motion track. In some possible implementations, the actuator may alternatively include a steering system and a brake control system in the intelligent driving device 100.

It should be understood that the foregoing modules are merely examples. In actual application, the foregoing modules may be added or deleted based on an actual requirement. For example, in the system architecture shown in FIG. 2, the module for lane change mode selection and lane change manner design and the planning and control module may be combined into one module.

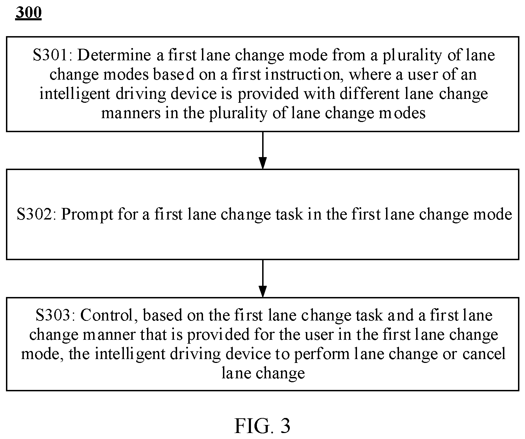

FIG. 3 is a schematic flowchart of a lane change method 300 according to an embodiment of this application. The method may be applied to the intelligent driving device shown in FIG. 1, or the method may be performed by the system shown in FIG. 2. For example, the following uses an example in which the method is performed by a computing platform of an ego vehicle for description. The method 300 may include the following steps.

S301: Determine a first lane change mode from a plurality of lane change modes based on a first instruction, where a user of an intelligent driving device is provided with different lane change manners in the plurality of lane change modes.

For example, the plurality of lane change modes may include a mode in which confirmation is always required, a mode in which confirmation is required at a high speed, and an intelligent initiation mode.

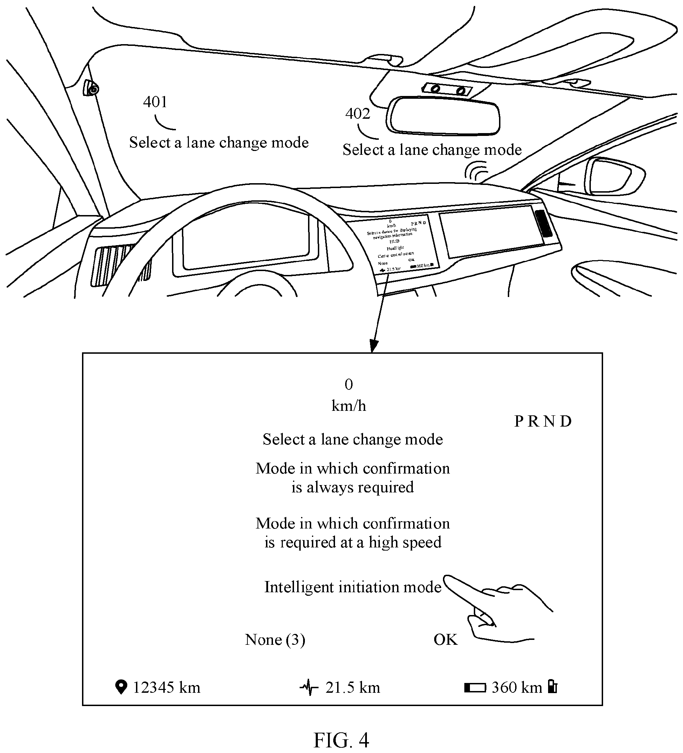

For example, the first instruction may be an instruction generated in response to an input of the user for an HMI (or a central control screen) of the ego vehicle. For example, as shown in FIG. 4, the user is prompted to select a lane change mode on the HMI. When detecting tap signals at positions of "Intelligent initiation mode" and "OK" on the HMI, a touch sensor generates, based on the tap signals, an instruction for confirming use of the intelligent initiation mode.

Alternatively, the first instruction may be an instruction generated for an operation on a physical component of the ego vehicle. The physical component may be a button on a steering wheel, or may be a lever. When a pressure sensor of the ego vehicle collects a pressing signal, a processing apparatus (for example, a processor) of the ego vehicle may process the pressing signal and perform corresponding control. In this case, the first instruction may be an instruction that is generated by the processing apparatus based on the pressing signal and that is for switching a lane change mode or confirming a lane change mode.

Alternatively, the first instruction may be a voice instruction of the user. For example, the computing platform may obtain an audio of the voice instruction by using a sound sensor (or a sound reception device), and parse out, by using the processing apparatus, voice semantics of "Enable the first lane change mode" or "Switch to the first lane change mode". The first instruction may be the voice instruction.

In some possible implementations, as shown in FIG. 4, after it is detected that the user enters a cockpit of the ego vehicle, the user may be prompted, by using at least one of a speaker, a HUD, or the HMI, to select a lane change mode. For example, as shown in 401 in FIG. 4, "Select a lane change mode" is displayed on the HUD. Alternatively, as shown in 402 in FIG. 4, "Select a lane change mode" is played through the speaker.

In some possible implementations, if the user does not select a lane change mode, it may be determined that a lane change mode used in a previous trip is the first lane change mode, or it may be determined that a default lane change mode of a system is the first lane change mode, or it may be determined, based on identity information of the user, that a lane change mode frequently used by the user is the first lane change mode.

For example, a lane change manner may include but is not limited to: a manner in which user confirmation is required, a manner in which no user confirmation is required, and a manner in which automatic confirmation is performed after limited time. In the manner in which user confirmation is required, the user is supported in confirming lane change or canceling lane change by using the lever, the button, the steering wheel, or the voice instruction.

For example, in the mode in which confirmation is always required, after a lane change task is prompted for, user confirmation is always required to perform lane change or cancel lane change.

In the mode in which confirmation is required at a high speed, it is determined, based on a traveling speed, whether the user needs to confirm lane change or cancel lane change. For example, when the traveling speed is greater than or equal to a first preset speed threshold, after a lane change task is prompted for, lane change is performed or canceled only after user confirmation. When the traveling speed is less than the first preset speed threshold, after the lane change task is prompted for, lane change is automatically confirmed after first preset duration. If a cancellation instruction of the user is detected within the first preset duration, lane change is canceled.

In the intelligent initiation mode, it is determined, based on a traveling scenario, whether the user needs to confirm lane change or canceling lane change. For example, when the traveling speed is greater than or equal to a second preset speed threshold, and the ego vehicle is in a lane combination scenario, after a lane change task is prompted for, lane change is performed or canceled only after user confirmation. When the traveling speed is less than the second preset speed threshold, and the ego vehicle is in the lane combination scenario, after the lane change task is prompted for, lane change is directly performed or canceled without requiring user confirmation. When the traveling speed is less than a third preset speed threshold, and the ego vehicle is in an overtaking scenario, after the lane change task is prompted for, lane change is automatically confirmed after second preset duration. If a cancellation instruction of the user is detected within the second preset duration, lane change is canceled.

In some possible implementations, a correspondence between the lane change mode and the lane change manner may be defined by the user, or may be set at factory delivery.

S302: Prompt for a first lane change task in the first lane change mode.

For example, "prompting for the first lane change task" may include controlling a display apparatus and/or a sound generation device to prompt for the first lane change task. For example, at least one of the speaker, the HUD, and the HMI may be controlled to prompt the user with the first lane change task.

For example, the first lane change task may be the lane change task in the foregoing embodiment, and may include information suggesting that lane change should be performed, or may include information notifying that lane change is to be performed. For example, the first lane change task may include information suggesting that a first lane should be changed to a second lane, or information notifying that the first lane is to be changed to the second lane. The first lane is a current traveling lane of the ego vehicle, and the second lane is a target traveling lane.

In some possible implementations, the first lane change task may be determined by the ego vehicle based on at least one of surrounding environment information (for example, information about a distance between a surrounding obstacle and the ego vehicle, and lane line information), road information, and navigation information of the ego vehicle. For example, when the navigation information of the ego vehicle prompts the ego vehicle with a need to turn right at a front intersection, but the ego vehicle is currently not in a right-turn lane, the first lane change task may be generated, and the first lane change task is prompted for, where the first lane change task indicates to change to the right-turn lane. Alternatively, the first lane change task may be obtained from a server by the ego vehicle, or may be generated or obtained in another manner.

S303: Control, based on the first lane change task and a first lane change manner that is provided for the user in the first lane change mode, the intelligent driving device to perform lane change or cancel lane change.

In an example, when the first lane change manner is the manner in which user confirmation is required, the intelligent driving device may be controlled, in response to an input of the user for the HMI of the ego vehicle, to perform lane change or cancel lane change. For example, when detecting tap signals at positions of "Confirm lane change" and "Cancel lane change" on the HMI, the touch sensor controls, based on the tap signals, the intelligent driving device to perform lane change or cancel lane change.

Alternatively, when the first lane change manner is the manner in which user confirmation is required, the intelligent driving device may be controlled, in response to an operation on a physical component of the ego vehicle, to perform lane change or cancel lane change. The physical component may be the steering wheel, or may be the button on the steering wheel, or may be the lever. When a torque sensor of the ego vehicle collects a torque signal, the processing apparatus (for example, the processor) of the ego vehicle may process the torque signal and perform corresponding control. When the pressure sensor of the ego vehicle collects a pressing signal, the processing apparatus (for example, the processor) of the ego vehicle may process the pressing signal and perform corresponding control.

Alternatively, when the first lane change manner is the manner in which user confirmation is required, the intelligent driving device may be controlled, in response to a voice instruction of the user, to perform lane change or cancel lane change. For example, the computing platform may obtain an audio of the voice instruction by using the sound sensor (or the sound reception device), and parse out, by using the processing apparatus, voice semantics of "Confirm lane change" or "Cancel lane change". The intelligent driving device is controlled, based on the voice instruction, to perform lane change or cancel lane change.

In another example, when the first lane change manner is the manner in which automatic confirmation is performed after limited time, the intelligent driving device may be controlled, based on an instruction generated by a behavior of the user, to perform lane change or cancel lane change. For example, when no operation of the user is detected within first preset duration after the first lane change task is prompted for, the intelligent driving device is controlled to perform lane change. Alternatively, when an operation of canceling lane change by the user is detected within the first preset duration after the first lane changing task is prompted for, the intelligent driving device is controlled to cancel lane change.

In still another example, when the first lane change manner is the manner in which no user confirmation is required, the intelligent driving device may be controlled, based on a traveling scenario, to perform lane change. For example, when the traveling speed is less than the second preset speed threshold, the ego vehicle is in the lane combination scenario, and surrounding environment meets a lane change condition, the intelligent driving device is controlled to perform lane change. Alternatively, when the traveling speed is less than the second preset speed threshold, the ego vehicle is in the lane combination scenario, and the surrounding environment does not meet the lane change condition, the intelligent driving device is controlled to cancel lane change. For example, the lane change condition may include: a distance between the ego vehicle and a road participant that is in another lane and that is behind the ego vehicle is greater than or equal to a first preset distance, and a distance between the ego vehicle and a road participant or an obstacle that is in another lane and that is in front of the ego vehicle is greater than or equal to a second preset distance. It should be understood that the "another lane" is a lane different from a lane in which the ego vehicle is located. In some possible implementations, a lane change scenario needs to comply with a road traffic regulation. For example, when the ego vehicle expects to perform overtaking, if a current traveling road section or a to-be-entered road section is detected to be at least one of a railway crossing, an intersection, a narrow bridge, a curve, a steep slope, a tunnel, a pedestrian crosswalk, and a road section with a large traffic flow in an urban area, it is considered that the lane change condition is not met.

According to a lane change method provided in embodiments of this application, a plurality of lane change modes are supported, and a lane change mode used during traveling can be determined from the plurality of lane change modes based on selection of the user, so that different driving habits of users can be met. In addition, the plurality of lane change manners are provided for the user for selection, to reduce a probability that a lane change occasion is missed due to untimely confirmation. This helps reduce a possibility that the user is distracted due to a lane change operation, and further improves traveling safety.

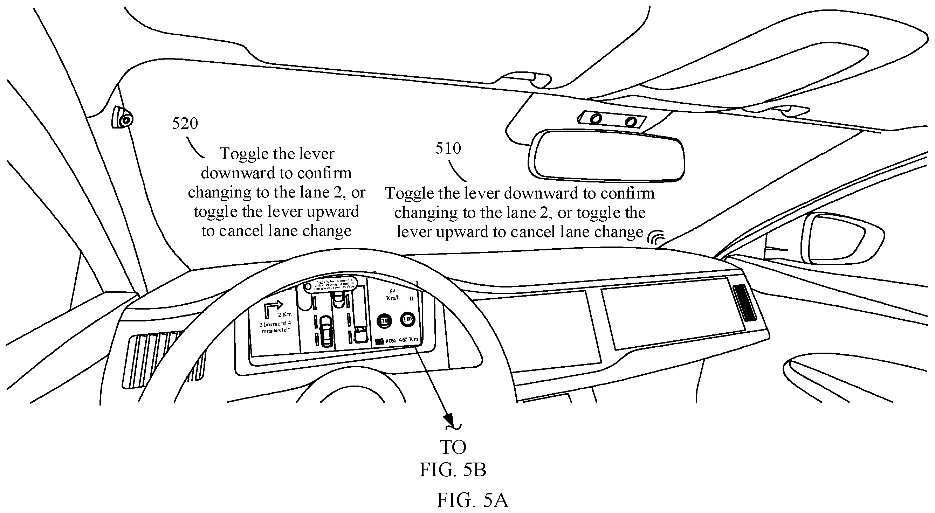

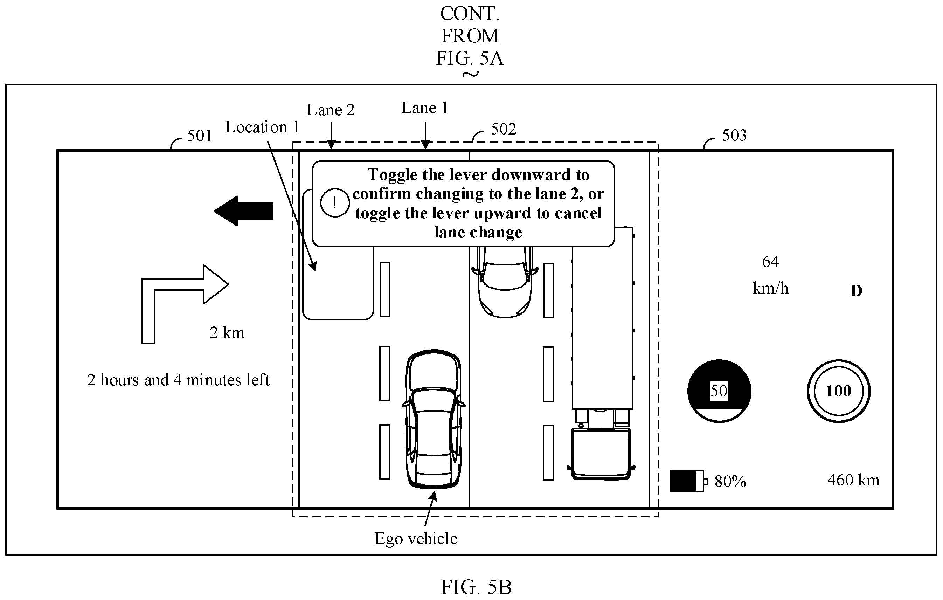

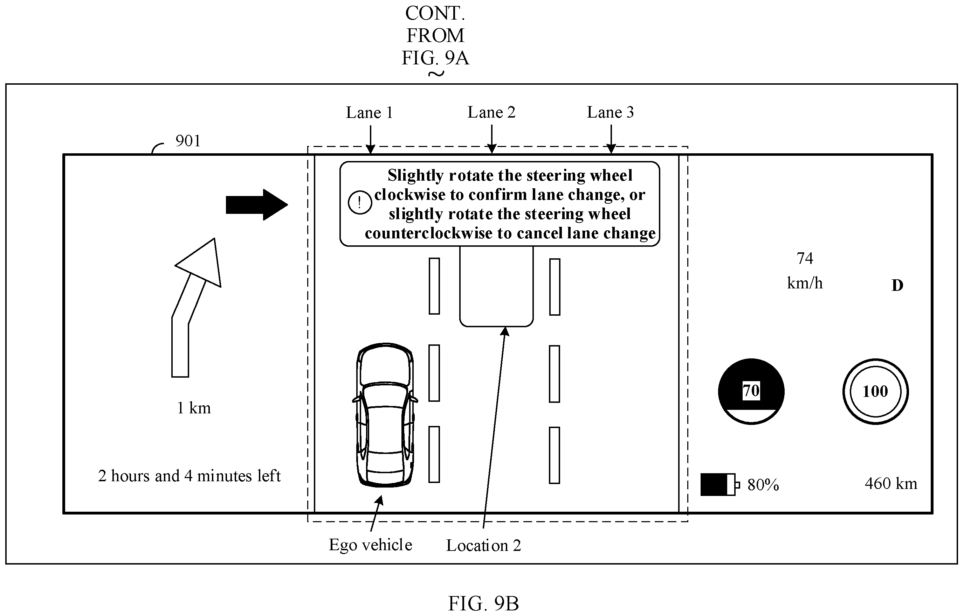

An example in which the intelligent driving device is a vehicle is used below. With reference to Table 1 and display change of a vehicle-mounted display of a vehicle in a lane change process shown in FIG. 5A and FIG. 5B to FIG. 9A and FIG. 9B, several lane change modes provided in the lane change method 300 are described in detail, and lane change manners that are provided for a user and that correspond to the lane change modes are described in detail.

In an example, as shown in Table 1, in a mode in which confirmation is always required, after it is detected that the vehicle needs to perform lane change, and a lane change task is prompted for, regardless of a specific traveling speed of the vehicle and a specific traveling scenario, the user needs to confirm lane change or cancel lane change by using a lever. For example, when a direction in which the lever is toggled is the same as a lane change direction of the vehicle, lane change is confirmed; or when the direction in which the lever is toggled is opposite to the lane change direction of the vehicle, lane change is canceled. If the user does not respond to prompt information, that is, does not operate the lever, the vehicle cancels the prompt information within third preset duration. For example, the third preset duration may be 20 seconds, or may be 10 seconds, or may be other duration.

In another example, when the first lane change mode is the mode in which confirmation is required at a high speed, the first lane change manner is determined based on a traveling speed of the vehicle, and the vehicle is controlled, based on the first lane change task and the first lane change manner in response to a first preset operation of the user, to perform lane change or cancel lane change. The first preset operation may include at least one of toggling a lever and rotating a steering wheel. Alternatively, the first preset operation may include at least one of toggling a lever, rotating a steering wheel, pressing a steering wheel button, and performing no action within first duration.

In some possible implementations, when the traveling speed of the vehicle is less than a preset speed threshold (for example, the first preset speed threshold in the foregoing embodiment), it is determined that the first lane change manner is the manner in which automatic confirmation is performed after limited time. Further, after it is detected that the vehicle needs to perform lane change, and the first lane change task is prompted for, if the user performs no action within the first duration (for example, the first preset duration in the foregoing embodiment), the vehicle automatically changes to the target traveling lane; if it is detected that the user performs, within the first duration, an operation of toggling the lever or twisting the steering wheel in a direction the same as the lane change direction of the vehicle, the vehicle is controlled to immediately change to the target driving lane; or if it is detected that the user performs, within the first duration, an operation of toggling the lever or twisting the steering wheel in a direction opposite to the lane change direction of the vehicle, the vehicle is controlled to cancel lane change.

In some possible implementations, when the traveling speed of the vehicle is greater than or equal to the preset speed threshold, it is determined that the first lane change manner is a manner in which user confirmation is required. Further, after it is detected that the vehicle needs to perform lane change, and the first lane change task is prompted for, if it is detected that the user performs an operation of toggling the lever in a direction the same as the lane change direction of the vehicle, the vehicle is controlled to immediately change to the target driving lane; or if it is detected that the user performs an operation of toggling the lever in a direction opposite to the lane change direction of the vehicle, the vehicle is controlled to cancel lane change.

For example, the preset speed threshold may be 60 kilometers/hour, or may be 65 kilometers/hour, or may be another value. The first duration may be 2 seconds, or may be 3 seconds, or may be another value.

In still another example, when the first lane change mode is the intelligent initiation mode, the first lane change manner is determined based on a traveling speed and a traveling scenario of the vehicle, and the vehicle is controlled, based on the first lane change task, the first lane change manner, and a first preset scenario, to perform lane change or cancel lane change; or the vehicle is controlled, based on the first lane change task and the first lane change manner in response to a second preset operation of the user, to perform lane change or cancel lane change. The second preset operation may include at least one of toggling a lever and rotating a steering wheel. Alternatively, the second preset operation may include at least one of toggling a lever, rotating a steering wheel, pressing a steering wheel button, and performing no action within second duration.

In some possible implementations, when the traveling scenario is at least one of converging from a ramp to a main road and performing lane change by using the lever, and the traveling speed is less than a preset speed threshold (for example, the second preset speed threshold in the foregoing embodiment), it is determined that the first lane change manner is the manner in which no user requirement is required. Further, after it is detected that the vehicle needs to perform lane change, and the first lane change task is prompted for, when determining that the traveling scenario is the scenario of converging from the ramp to the main road (namely, the first preset scenario), the vehicle automatically changes to the target traveling lane when surrounding environment meets the lane change condition.

In some possible implementations, when the traveling scenario is at least one of lane change based on navigation, lane change during overtaking, or lane change in an emergency, and the traveling speed is less than the preset speed threshold, it is determined that the first lane change manner is the manner in which automatic confirmation is performed after limited time. Further, after it is detected that the vehicle needs to perform lane change, and the first lane change task is prompted for, if the user performs no action within the second duration (for example, the second preset duration in the foregoing embodiment), the vehicle automatically changes to the target traveling lane; if it is detected that the user performs, within the second duration, an operation of toggling the lever or twisting the steering wheel in a direction the same as the lane change direction of the vehicle, the vehicle is controlled to immediately change to the target driving lane; or if it is detected that the user performs, within the second duration, an operation of toggling the lever or twisting the steering wheel in a direction opposite to the lane change direction of the vehicle, the vehicle is controlled to cancel lane change. It should be noted that the foregoing "lane change based on navigation" means changing a lane based on navigation information. For example, the vehicle needs to turn right at a front intersection, but a lane in which the vehicle is currently located is not a right-turn lane. In this case, the vehicle needs to change to the right-turn lane based on the navigation information.

In some possible implementations, the first lane change task indicates the vehicle to change from a third lane to a fourth lane. When the second preset operation is an operation of toggling the lever or rotating the steering wheel in a direction the same as a lane change direction within the second duration, the vehicle changes from the third lane to the fourth lane in response to the second preset operation. Further, when it is detected, within third duration, that the vehicle needs to change from the fourth lane to a fifth lane, the vehicle may automatically change from the fourth vehicle to the fifth lane when a lane change condition is met. For example, a requirement for the vehicle to change from the fourth lane to the fifth lane may be determined based on navigation information. The third duration may be 5 seconds, or may be 8 seconds, or may be other duration.

In some possible implementations, when the traveling speed of the vehicle is greater than or equal to the preset speed threshold, it is determined that the first lane change manner is a manner in which user confirmation is required. Further, after it is detected that the vehicle needs to perform lane change, and the first lane change task is prompted for, if it is detected that the user performs an operation of toggling the lever in a direction the same as the lane change direction of the vehicle, the vehicle is controlled to immediately change to the target driving lane; or if it is detected that the user performs an operation of toggling the lever in a direction opposite to the lane change direction of the vehicle, the vehicle is controlled to cancel lane change.

For example, the preset speed threshold may be 60 kilometers/hour, or may be 65 kilometers/hour, or may be another value. The second duration may be 2 seconds, or may be 3 seconds, or may be another value.

**Table 1 Lane change modes and lane change manners corresponding to the lane change modes**

| Lane change modes | A traveling speed is less than a preset speed threshold | The traveling speed is greater than or equal to the preset speed threshold |
|---|---|---|
| Mode in which confirmation is always required | Toggle a lever to perform confirmation or canceling. | Toggle the lever to perform confirmation or canceling. |
| Mode in which confirmation is required at a high speed | Automatically perform lane change after first duration within which a lane change task is prompted for; when a steering wheel torque signal is received within the first duration, if a direction indicated by the torque signal is the same as a lane change direction of a vehicle, lane change is confirmed; or if the direction indicated by the torque signal is opposite to the lane change direction of the vehicle, lane change is canceled; or | Rotate a steering wheel to perform confirmation or canceling; or toggle the lever to perform confirmation or canceling. |
| | when a lever signal is received within the first duration, if a direction indicated by the lever signal is the same as the lane change direction of the vehicle, lane change is confirmed; or if the direction indicated by the lever signal is opposite to the lane change direction of the vehicle, lane change is canceled. | |
| Intelligent initiation mode | Automatically perform lane change after second duration within which a lane change task is prompted for; | Rotate the steering wheel to perform confirmation or canceling; or toggle the lever to perform |
| | when a steering wheel torque signal is received within the second duration, if a direction indicated by the torque signal is the same as a lane change direction of | |
| | the vehicle, lane change is confirmed; or if the direction indicated by the torque signal is opposite to the lane change direction of the vehicle, lane change is canceled; or | confirmation or canceling. |
| | when a lever signal is received within the second duration, if a direction indicated by the lever signal is the same as the lane change direction of the vehicle, lane change is confirmed; or if the direction indicated by the lever signal is opposite to the lane change direction of the vehicle, lane change is canceled. | |

In some possible implementations, when the traveling speed is lower than the preset speed threshold, the user may further confirm lane change by using a confirmation button (for example, an "OK" button or an "Enter" button) on the steering wheel. For example, in response to an operation of pressing the confirmation button by the user, the vehicle is controlled to change to a target traveling lane. In addition, when a lane change task is initiated again within fifth preset duration, the vehicle can be directly controlled to perform lane change without requiring user confirmation. For example, the fifth preset duration may be 20 seconds, or may be 30 seconds, or may be other duration.

In some possible implementations, when the user is prompted with a lane change task on the HMI, the user may be further provided with a virtual button of "Confirm lane change" or "Cancel lane change" on the HMI. In response to an operation of tapping the virtual button of "Confirm lane change" or "Cancel lane change" by the user, the vehicle is controlled to change to a target traveling lane, or cancel lane change.

For example, FIG. 5A and FIG. 5B are a diagram of a group of graphical user interfaces (graphical user interfaces, GUIs) displayed on a vehicle-mounted display in a vehicle lane change process in a mode in which confirmation is always required. As shown in FIG. 5B, an instrument screen of a vehicle includes a display area 501, a display area 502, and a display area 503. The display area 501 may display navigation information (for example, a user is prompted to turn right at a distance of 2 kilometers ahead, and is prompted with estimated traveling duration) of the vehicle. The display area 502 may display a virtual scene that is generated by using data collected by a sensor. The virtual scene includes an ego vehicle and environment information (for example, information about another vehicle and information about a lane line) around the ego vehicle. The virtual scenario may be used to assist the user in performing lane change. The display area 503 may display a current speed (for example, 64 kilometers/hour), gear information (for example, the ego vehicle is currently in a D gear), a road speed limit value (for example, 100 kilometers/hour), a minimum road traveling speed (for example, 50 kilometers/hour), a state of charge (for example, 80%), an endurance mileage (for example, 460 kilometers), and the like of the vehicle.

The display area 502 shown in FIG. 5B is described by using a two-dimensional (two-dimensional, 2D) virtual scenario as an example. Embodiments of this application are not limited thereto. The display area 502 may also display a three-dimensional (three-dimensional, 3D) virtual scenario, or may further display another virtual scenario.

As shown in FIG. 5A and FIG. 5B, the ego vehicle is currently in the mode in which confirmation is always required, and is located on a lane 1. When it is detected that the ego vehicle needs to change to a lane 2 (for example, change to a location 1 of the lane 2), a lane change task is prompted for, and/or a manner for confirming lane change or canceling lane change is prompted for. For example, a lane change task may be prompted for by using a speaker or on a display. For example, the lane change task "Change to the lane 2" is broadcast by using the speaker, or the lane change task "Change to the lane 2" is prompted for on the display (for example, an HMI or a HUD). For another example, the lane change task and the manner for confirming lane change or canceling lane change, for example, content "Toggle the lever downward to confirm changing to the lane 2, or toggle the lever upward to cancel lane change" shown in 510, may be broadcast by using the speaker. Alternatively, content shown in 520 may be displayed on the HUD to prompt for the lane change task and the manner for confirming lane change or canceling lane change. Alternatively, the foregoing lane change task and lane change content may be prompted for on the instrument screen. Further, if the user toggles the lever downward (in a direction consistent with a lane change direction), the ego vehicle is controlled, in response to an operation of the user, to change to the lane 2 for traveling; or if the user toggles the lever upward (in a direction opposite to the lane change direction), lane change is canceled in response to an operation of the user.

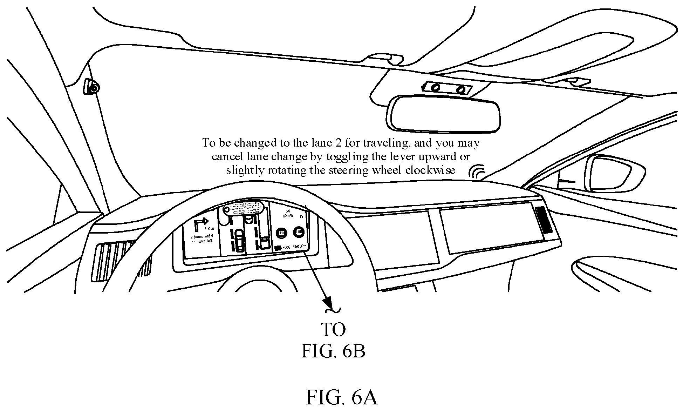

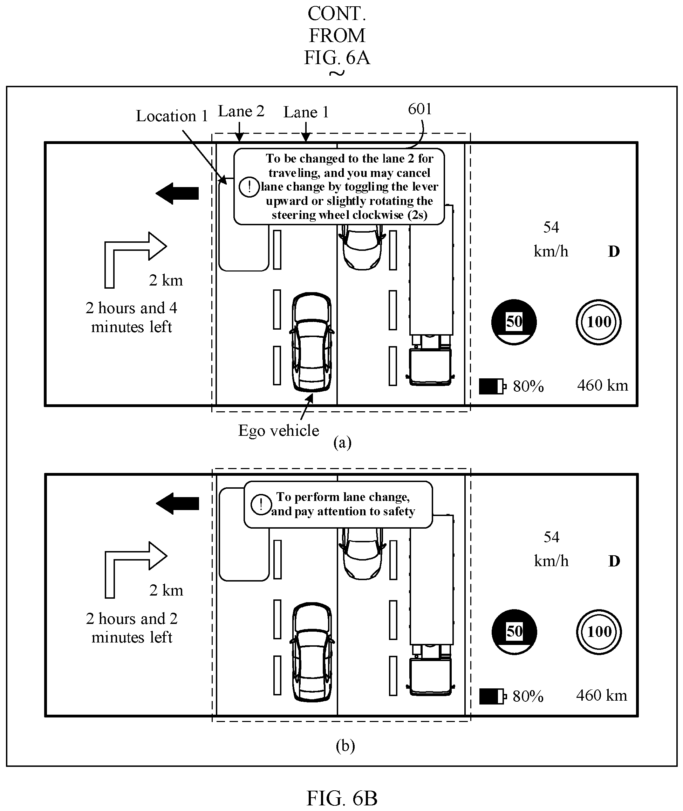

FIG. 6A and FIG. 6B are a diagram of a group of GUIs displayed on a vehicle-mounted display when an ego vehicle is in a mode in which confirmation is required at a high speed, a traveling speed of the ego vehicle is less than a preset speed threshold (in this embodiment of this application, an example in which the preset speed threshold is 60 kilometers/hour is used for description), and the ego vehicle needs to change from a lane 1 to a lane 2. For example, as shown in (a) in FIG. 6B, a lane change task and a manner for confirming lane change or canceling lane change shown in 601, namely, "To be changed to the lane 2 for traveling, and you may cancel lane change by toggling the lever upward or slightly rotating the steering wheel clockwise (2s)", may be displayed on an instrument screen, where "(2s)" is a quantity of seconds of a countdown, and a total quantity of seconds of the countdown may be the foregoing first duration. If the user does not toggle the lever or does not slightly rotate the steering wheel after the quantity of seconds of the countdown returns to zero, the ego vehicle is controlled to change to the lane 2, and the user may be further prompted, by "To perform lane change, and pay attention to safety" shown in (b) in FIG. 6B, to observe a road condition. If the user toggles the lever upward (in a direction opposite to a lane change direction) or slightly rotates the steering wheel clockwise (in a direction opposite to the lane change direction) before the quantity of seconds of the countdown returns to zero, the lane change is canceled in response to an operation of the user, and the vehicle is controlled to continue traveling on the lane 1. Alternatively, the foregoing lane change task and the manner for confirming lane change or canceling lane change may be prompted for by using a speaker or on a HUD. For example, when the traveling speed of the ego vehicle is greater than or equal to 60 kilometers/hour, for a method for prompting the lane change task and/or the manner for confirming lane change or canceling lane change, refer to the embodiment corresponding to FIG. 5A and FIG. 5B.

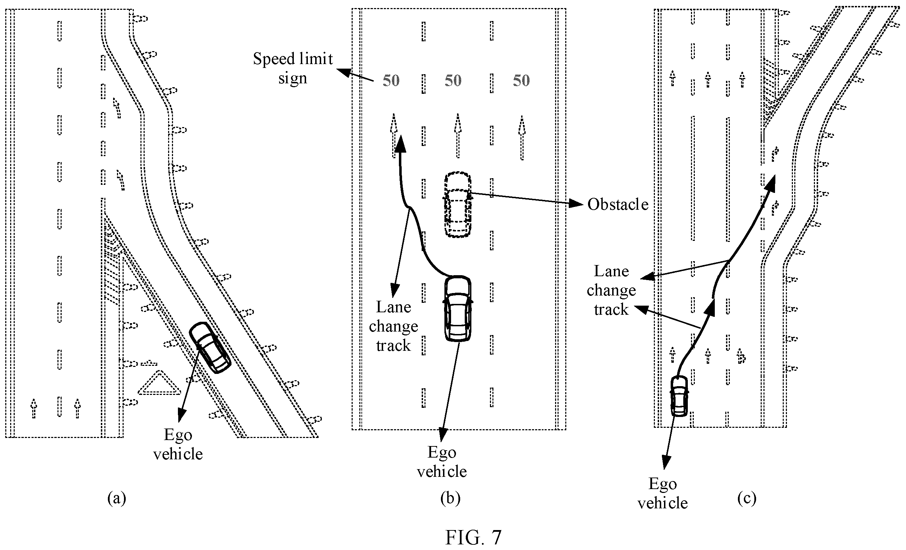

FIG. 7 shows three possible traveling scenarios in a traveling process of the ego vehicle (in this embodiment of this application, an example in which a preset speed threshold is 60 kilometers/hour is used for description). In the figure, (a) shows a scenario in which the ego vehicle converges from a ramp to a main road; (b) shows a scenario in which the ego vehicle changes a lane to perform overtaking in a process of traveling on a road with a speed limit of 50 kilometers/hour; and (c) shows a scenario in which the ego vehicle needs to perform lane change to enter a ramp when traveling on a highway. It should be understood that in the first two traveling scenarios, a traveling speed of the ego vehicle is less than 60 kilometers/hour, and in the latter traveling scenario, the traveling speed of the ego vehicle is greater than 60 kilometers/hour.

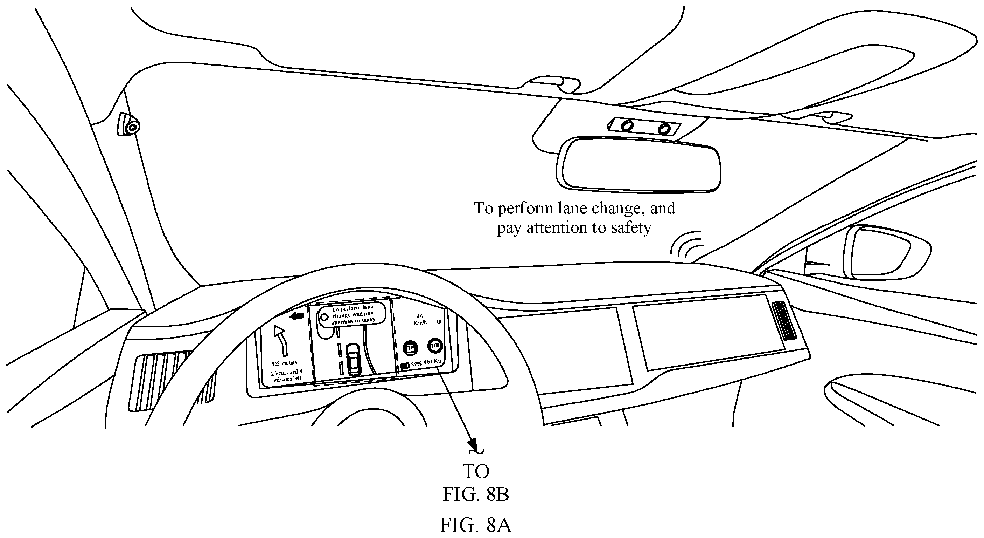

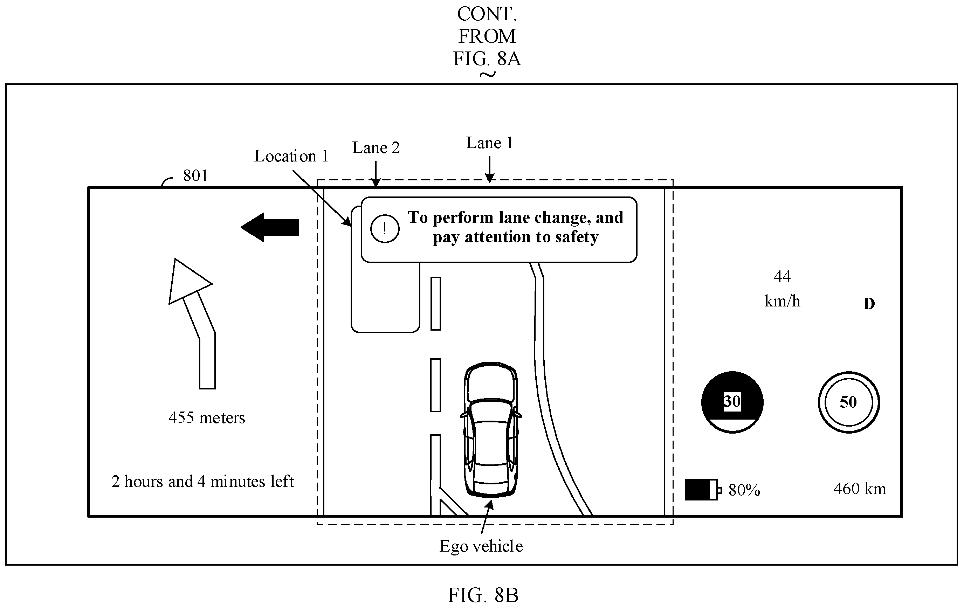

For example, when the ego vehicle is in an intelligent initiation mode and is in the traveling scenario shown in (a) in FIG. 7, if it is detected that lane change is required, the ego vehicle may be automatically controlled to perform lane change without requiring the user to confirm whether to perform lane change, and the user is prompted with a lane change task before lane change is performed. As shown in FIG. 8A and FIG. 8B, when traveling on the lane 1 at a speed of 44 kilometers/hour, the ego vehicle needs to travel leftward to converge into a main road (as shown in a display area 801, a distance to the main road is 455 meters). In this case, before lane change is performed, a speaker or an instrument screen may be used to prompt the user with "To perform lane change, and pay attention to safety".

For example, when the ego vehicle is in the intelligent initiation mode and is in the traveling scenario shown in (b) in FIG. 7, for a method for prompting a lane change task and/or a manner for confirming lane change or canceling lane change, refer to the embodiment corresponding to FIG. 6A and FIG. 6B.

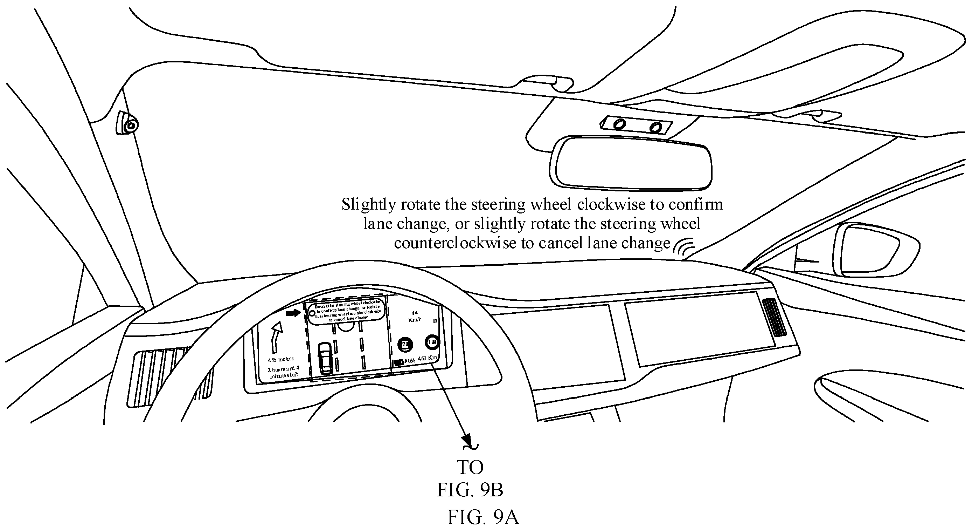

For example, when the ego vehicle is in the intelligent initiation mode and is in the traveling scenario shown in (c) in FIG. 7, if it is detected that lane change is required, when a lane change task is prompted for, a GUI shown in FIG. 9A and FIG. 9B may be used to prompt the user with a manner for confirming lane change or canceling lane change. As shown in FIG. 9A and FIG. 9B, when traveling on the lane 1 at a speed of 74 kilometers/hour, the ego vehicle needs to travel rightward to pass through the lane 2 (for example, a location 2 of the lane 2) and a lane 3, to travel into a ramp (as shown in a display area 901, a distance to a ramp intersection is 1 kilometer in this case). In this case, a speaker or an instrument screen may be used to prompt for a manner for confirming lane change or canceling lane change, namely, "Slightly rotate the steering wheel clockwise to confirm lane change, or slightly rotate the steering wheel counterclockwise to cancel lane change". Further, in response to an operation of slightly rotating the steering wheel clockwise (in a direction the same as a lane change direction) by the user, the ego vehicle is controlled to change from the lane 1 to the lane 2; or in response to an operation of slightly rotating the steering wheel counterclockwise (in a direction opposite to the lane change direction) by the user, a lane change operation is canceled. For example, when an absolute value of a steering wheel torque is greater than a first torque threshold and less than or equal to a second torque threshold, it is considered that a user operation is an operation of "slightly rotating the steering wheel".

It should be noted that the GUIs shown in FIG. 5A and FIG. 5B to FIG. 9A and FIG. 9B are merely examples for description. In a specific implementation process, only the lane change task may be prompted for, that is, "Recommend changing to the lane 2" is prompted for, or "To be changed to the lane 2" is prompted for, where the lane 2 is a target traveling lane.

In embodiments of this application, unless otherwise stated or there is a logic conflict, terms and/or descriptions between the embodiments are consistent and may be mutually referenced, and technical features in different embodiments may be combined into a new embodiment based on an internal logical relationship thereof.

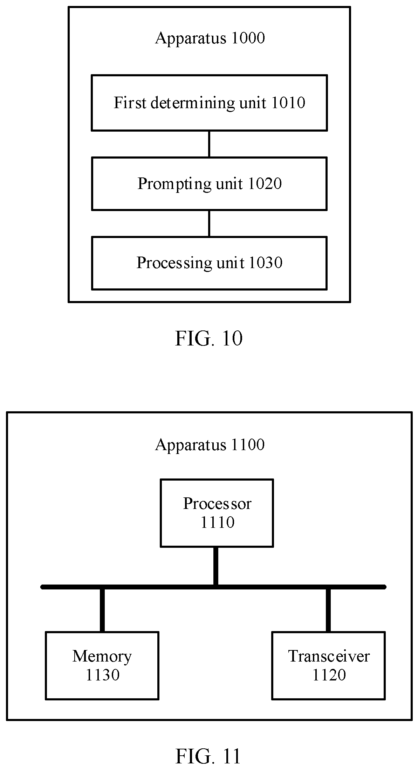

The methods provided in embodiments of this application are described above in detail with reference to FIG. 2 to FIG. 9A and FIG. 9B. The following describes in detail an apparatus provided in embodiments of this application with reference to FIG. 10 and FIG. 11. It should be understood that descriptions of apparatus embodiments correspond to the descriptions of the method embodiments. Therefore, for content that is not described in detail, refer to the method embodiments above. For brevity, details are not described herein again.

FIG. 10 is a block diagram of a lane change apparatus 1000 according to an embodiment of this application. The apparatus 1000 includes a first determining unit 1010, a prompting unit 1020, and a processing unit 1030.

The apparatus 1000 may include a unit configured to perform the method in FIG. 3. In addition, the units in the apparatus 1000 and the foregoing other operations and/or functions are respectively intended to implement corresponding procedures of the method embodiment in FIG. 3.

When the apparatus 1000 is configured to perform the method 300 in FIG. 3, the first determining unit 1010 may be configured to perform S301 in the method 300, the prompting unit 1020 may be configured to perform S302 in the method 300, and the processing unit 1030 may be configured to perform S303 in the method 300.

Specifically, the first determining unit 1010 is configured to determine a first lane change mode from a plurality of lane change modes based on a first instruction, where a user of an intelligent driving device is provided with different lane change manners in the plurality of lane change modes. The prompting unit 1020 is configured to prompt for a first lane change task in the first lane change mode. The processing unit 1030 is configured to: control, based on the first lane change task and a first lane change manner that is provided for the user in the first lane change mode, the intelligent driving device to perform lane change or cancel lane change.

Optionally, the apparatus 1000 further includes a second determining unit, configured to determine the first lane change manner based on a traveling speed of the intelligent driving device. The processing unit 1030 is configured to: control, based on the first lane change task and the first lane change manner in response to a first preset operation of the user, the intelligent driving device to perform lane change or cancel lane change.

Optionally, when the traveling speed is greater than or equal to a first preset speed threshold, the first preset operation includes at least one of toggling a lever and rotating a steering wheel; or when the traveling speed is less than the first preset speed threshold, the first preset operation includes at least one of toggling a lever, rotating a steering wheel, pressing a steering wheel button, and performing no action within first duration.

Optionally, the apparatus 1000 further includes a third determining unit, configured to determine the first lane change manner based on a traveling speed and a traveling scenario of the intelligent driving device. The processing unit 1030 is configured to: control, based on the first lane change task, the first lane change manner, and a first preset scenario, the intelligent driving device to perform lane change or cancel lane change; or control, based on the first lane change task and the first lane change manner in response to a second preset operation of the user, the intelligent driving device to perform lane change or cancel lane change.

Optionally, when the traveling speed is greater than or equal to a second preset speed threshold, the second preset operation includes at least one of toggling a lever and rotating a steering wheel; or when the traveling speed is less than the second preset speed threshold, and the traveling scenario is a second preset scenario, the second preset operation includes at least one of toggling a lever, rotating a steering wheel, pressing a steering wheel button, and performing no action within second duration.

Optionally, when the first lane change task indicates the intelligent driving device to change from a first lane to a second lane, and the second preset operation is an operation of toggling the lever in a first direction or rotating the steering wheel in the first direction, the processing unit 1030 is configured to: control, in response to the second preset operation, the intelligent driving device to cancel lane change, where the first direction is a direction opposite to a direction in which the intelligent driving device changes from the first lane to the second lane.

Optionally, after the processing unit 1030 controls the intelligent driving device to cancel lane change, the prompting unit 1020 is further configured to prompt for a second lane change task.

Optionally, when the first lane change task indicates the intelligent driving device to change from a third lane to a fourth lane, and the second preset operation is an operation of toggling the lever in a second direction or rotating the steering wheel in the second direction within the second duration, the processing unit 1030 is configured to: control, in response to the second preset operation, the intelligent driving device to change from the third lane to the fourth lane, where the second direction is a direction the same as a direction in which the intelligent driving device changes from the third lane to the fourth lane.

Optionally, the processing unit 1030 is further configured to: when it is detected, within third duration, that the intelligent driving device needs to change from the fourth lane to a fifth lane, control the intelligent driving device to perform lane change.

Optionally, when the traveling speed is less than the second preset speed threshold, the first lane change task indicates the intelligent driving device to change from a sixth lane to a seventh lane, and in response to an operation of pressing the steering wheel button, after the processing unit 1030 controls the intelligent driving device to change from the sixth lane to the seventh lane, the processing unit 1030 is further configured to: when it is detected, within fourth duration, that the intelligent driving device needs to change from the seventh lane to an eighth lane, control the intelligent driving device to perform lane change.

For example, the apparatus 1000 may be disposed in the module for lane change mode selection and lane change mode design shown in FIG. 2.

It should be understood that unit division of the foregoing apparatus is merely logical function division. During actual implementation, all or some of the units may be integrated into one physical entity, or may be physically separated. In addition, the units in the apparatus may be implemented in a form in which a processor invokes software. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the foregoing units are implemented by designing a logical relationship between components in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement the functions of some or all of the foregoing units. All units of the foregoing apparatus may be implemented in a form of software invoked by the processor, or all units may be implemented in a form of the hardware circuit, or some units may be implemented in a form of software invoked by the processor, and a remaining part may be implemented in a form of the hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by using an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that the units in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a specific implementation process, the operations performed by the first determining unit 1010, the prompting unit 1020, and the processing unit 1030 may be performed by a same processor, or may be performed by different processors, for example, separately performed by a plurality of processors. In a specific implementation process, the one or more processors may be processors disposed on the computing platform 150 shown in FIG. 1, or may be processors disposed on a cloud server. In a specific implementation process, the apparatus 1000 may be a chip disposed in the intelligent driving device 100.

FIG. 11 is a block diagram of a lane change apparatus according to an embodiment of this application. A lane change apparatus 1100 shown in FIG. 11 may include a processor 1110, a transceiver 1120, and a memory 1130. The processor 1110, the transceiver 1120, and the memory 1130 are connected through an internal connection path. The memory 1130 is configured to store instructions. The processor 1110 is configured to execute the instructions stored in the memory 1130, so that the transceiver 1120 receives/sends some parameters. Optionally, the memory 1130 may be coupled to the processor 1110 through an interface, or may be integrated with the processor 1110.

It should be noted that the transceiver 1120 may include but is not limited to a transceiver apparatus like an input/output interface (input/output interface), to implement communication between the apparatus 1100 and another device or a communication network.

The memory 1130 may be a read-only memory (read-only memory, ROM), a static storage device, a dynamic storage device, or a random access memory (random access memory, RAM).

The transceiver 1120 uses a transceiver apparatus, for example, but not limited to, a transceiver, to implement communication between the apparatus 1100 and another device or a communication network.

In some possible implementations, the apparatus 1100 may be disposed in the computing platform 150 shown in FIG. 1, or may be disposed in the module for lane change mode selection and lane change manner design shown in FIG. 2.

An embodiment of this application further provides an intelligent driving device. The intelligent driving device may include the foregoing apparatus 1000 or the foregoing apparatus 1100.

In some possible implementations, the intelligent driving device may be a vehicle.

An embodiment of this application further provides a computer program product. The computer program product includes computer program code. When the computer program code is run on a computer, the computer is enabled to implement the methods in embodiments of this application.

An embodiment of this application further provides a computer-readable storage medium. The computer-readable medium stores computer instructions. When the computer instructions are run on a computer, the computer is enabled to implement the methods in embodiments of this application.

An embodiment of this application further provides a chip, including a circuit, configured to perform the methods in embodiments of this application.

In an implementation process, steps in the foregoing methods may be completed by using a hardware integrated logic circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing described system, apparatus, and unit, refer to a corresponding process in the foregoing method embodiments. Details are not described herein again.

In several embodiments provided in this application, it should be understood that the disclosed system, apparatus and method may be implemented in another manner. For example, the described apparatus embodiments are merely examples. For example, division into the units is merely logical function division and may be other division during actual implementation. For example, a plurality of units or components may be combined or may be integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A lane change method, comprising:
determining a first lane change mode from a plurality of lane change modes based on a first instruction, wherein a user of an intelligent driving device is provided with different lane change manners in the plurality of lane change modes;
prompting for a first lane change task in the first lane change mode; and
controlling, based on the first lane change task and a first lane change manner that is provided for the user in the first lane change mode, the intelligent driving device to perform lane change or cancel lane change.

2. The method according to claim 1, wherein the method further comprises:
determining the first lane change manner based on a traveling speed of the intelligent driving device; and
the controlling, based on the first lane change task and a first lane change manner that is provided for the user in the first lane change mode, the intelligent driving device to perform lane change or cancel lane change comprises:
controlling, based on the first lane change task and the first lane change manner in response to a first preset operation of the user, the intelligent driving device to perform lane change or cancel lane change.

3. The method according to claim 2, wherein when the traveling speed is greater than or equal to a first preset speed threshold, the first preset operation comprises at least one of toggling a lever and rotating a steering wheel; or
when the traveling speed is less than the first preset speed threshold, the first preset operation comprises at least one of toggling a lever, rotating a steering wheel, pressing a steering wheel button, and performing no action within first duration.

4. The method according to claim 1, wherein the method further comprises:
determining the first lane change manner based on a traveling speed and a traveling scenario of the intelligent driving device; and
the controlling, based on the first lane change task and a first lane change manner that is provided for the user in the first lane change mode, the intelligent driving device to perform lane change or cancel lane change comprises:
controlling, based on the first lane change task, the first lane change manner, and a first preset scenario, the intelligent driving device to perform lane change or cancel lane change; or
controlling, based on the first lane change task and the first lane change manner in response to a second preset operation of the user, the intelligent driving device to perform lane change or cancel lane change.

5. The method according to claim 4, wherein when the traveling speed is greater than or equal to a second preset speed threshold, the second preset operation comprises at least one of toggling a lever and rotating a steering wheel; or
when the traveling speed is less than the second preset speed threshold, and the traveling scenario is a second preset scenario, the second preset operation comprises at least one of toggling a lever, rotating a steering wheel, pressing a steering wheel button, and performing no action within second duration.

6. The method according to claim 5, wherein when the first lane change task indicates the intelligent driving device to change from a first lane to a second lane, and the second preset operation is an operation of toggling the lever in a first direction or rotating the steering wheel in the first direction, the controlling the intelligent driving device to perform lane change or cancel lane change comprises:
controlling, in response to the second preset operation, the intelligent driving device to cancel lane change, wherein
the first direction is a direction opposite to a direction in which the intelligent driving device changes from the first lane to the second lane.

7. The method according to claim 6, wherein after the controlling the intelligent driving device to cancel lane change, the method further comprises:
prompting for a second lane change task.

8. The method according to claim 5, wherein when the first lane change task indicates the intelligent driving device to change from a third lane to a fourth lane, and the second preset operation is an operation of toggling the lever in a second direction or rotating the steering wheel in the second direction within the second duration, the controlling the intelligent driving device to perform lane change or cancel lane change comprises:
controlling, in response to the second preset operation, the intelligent driving device to change from the third lane to the fourth lane, wherein
the second direction is a direction the same as a direction in which the intelligent driving device changes from the third lane to the fourth lane.

9. The method according to claim 8, wherein the method further comprises:
when it is detected, within third duration, that the intelligent driving device needs to change from the fourth lane to a fifth lane, controlling the intelligent driving device to perform lane change.

10. The method according to any one of claims 5 to 9, wherein when the traveling speed is less than the second preset speed threshold, the first lane change task indicates the intelligent driving device to change from a sixth lane to a seventh lane, and in response to an operation of pressing the steering wheel button, after the intelligent driving device is controlled to change from the sixth lane to the seventh lane, the method further comprises:
when it is detected, within fourth duration, that the intelligent driving device needs to change from the seventh lane to an eighth lane, controlling the intelligent driving device to perform lane change.

11. A lane change apparatus, comprising a first determining unit, a prompting unit, and a processing unit, wherein
the first determining unit is configured to determine a first lane change mode from a plurality of lane change modes based on a first instruction, wherein a user of an intelligent driving device is provided with different lane change manners in the plurality of lane change modes;
the prompting unit is configured to prompt for a first lane change task in the first lane change mode; and
the processing unit is configured to: control, based on the first lane change task and a first lane change manner that is provided for the user in the first lane change mode, the intelligent driving device to perform lane change or cancel lane change.

12. The apparatus according to claim 11, wherein the apparatus further comprises a second determining unit, configured to determine the first lane change manner based on a traveling speed of the intelligent driving device; and
the processing unit is configured to: control, based on the first lane change task and the first lane change manner in response to a first preset operation of the user, the intelligent driving device to perform lane change or cancel lane change.

13. The apparatus according to claim 12, wherein when the traveling speed is greater than or equal to a first preset speed threshold, the first preset operation comprises at least one of toggling a lever and rotating a steering wheel; or
when the traveling speed is less than the first preset speed threshold, the first preset operation comprises at least one of toggling a lever, rotating a steering wheel, pressing a steering wheel button, and performing no action within first duration.

14. The apparatus according to claim 11, wherein the apparatus further comprises a third determining unit, configured to determine the first lane change manner based on a traveling speed and a traveling scenario of the intelligent driving device; and
the processing unit is configured to:
control, based on the first lane change task, the first lane change manner, and a first preset scenario, the intelligent driving device to perform lane change or cancel lane change; or
control, based on the first lane change task and the first lane change manner in response to a second preset operation of the user, the intelligent driving device to perform lane change or cancel lane change.

15. The apparatus according to claim 14, wherein when the traveling speed is greater than or equal to a second preset speed threshold, the second preset operation comprises at least one of toggling a lever and rotating a steering wheel; or
when the traveling speed is less than the second preset speed threshold, and the traveling scenario is a second preset scenario, the second preset operation comprises at least one of toggling a lever, rotating a steering wheel, pressing a steering wheel button, and performing no action within second duration.

16. The apparatus according to claim 15, wherein when the first lane change task indicates the intelligent driving device to change from a first lane to a second lane, and the second preset operation is an operation of toggling the lever in a first direction or rotating the steering wheel in the first direction, the processing unit is configured to:
control, in response to the second preset operation, the intelligent driving device to cancel lane change, wherein
the first direction is a direction opposite to a direction in which the intelligent driving device changes from the first lane to the second lane.

17. The apparatus according to claim 16, wherein after the processing unit controls the intelligent driving device to cancel lane change, the prompting unit is further configured to:
prompt for a second lane change task.

18. The apparatus according to claim 15, wherein when the first lane change task indicates the intelligent driving device to change from a third lane to a fourth lane, and the second preset operation is an operation of toggling the lever in a second direction or rotating the steering wheel in the second direction within the second duration, the processing unit is configured to:
control, in response to the second preset operation, the intelligent driving device to change from the third lane to the fourth lane, wherein
the second direction is a direction the same as a direction in which the intelligent driving device changes from the third lane to the fourth lane.

19. The apparatus according to claim 18, wherein the processing unit is further configured to:
when it is detected, within third duration, that the intelligent driving device needs to change from the fourth lane to a fifth lane, control the intelligent driving device to perform lane change.

20. The apparatus according to any one of claims 15 to 19, wherein when the traveling speed is less than the second preset speed threshold, the first lane change task indicates the intelligent driving device to change from a sixth lane to a seventh lane, and in response to an operation of pressing the steering wheel button, after the processing unit controls the intelligent driving device to change from the sixth lane to the seventh lane, the processing unit is further configured to:
when it is detected, within fourth duration, that the intelligent driving device needs to change from the seventh lane to an eighth lane, control the intelligent driving device to perform lane change.

21. A lane change apparatus, comprising:
a memory, configured to store a computer program; and
a processor, configured to execute the computer program stored in the memory, so that the apparatus performs the method according to any one of claims 1 to 10.

22. An intelligent driving device, comprising the apparatus according to any one of claims 11 to 21.

23. A computer-readable storage medium, wherein the computer-readable storage medium stores instructions, and when the instructions are executed by a processor, the processor is enabled to implement the method according to any one of claims 1 to 10.

24. A chip, wherein the chip comprises a circuit, and the circuit is configured to perform the method according to any one of claims 1 to 10.
